Europäisches Patentamt

European Patent Office

Office européen des brevets

(11) Publication number: **0 517 973 A1**

## EUROPEAN PATENT APPLICATION

(21) Application number: **91305313.8**

(22) Date of filing: **12.06.91**

(51) Int. Cl.5: **H04L 12/40**

(43) Date of publication of application:
**16.12.92 Bulletin 92/51**

(84) Designated Contracting States:
**DE FR GB IT**

(71) Applicant: **Hewlett-Packard Company
Mail Stop 20 B-O, 3000 Hanover Street
Palo Alto, California 94304(US)**

(72) Inventor: **Watson,Gregory Charles Adam
4 Devonshire Road,Westbury Park
Bristol BS6 7NJ(GB)**

(74) Representative: **Squibbs, Robert Francis et al
Hepworth, Lawrence, Bryer & Bizley, 139 St.
Michael's Hill
Bristol, Avon BS2 8BS(GB)**

(54) Dual bus communication system.

(57) A communications system has a plurality of stations ($S_1$,$S_2$ ... $S_N$) interconnected by a pair of unidirectional, oppositely-directed signal paths (A,B). For transmitting data down one path (A), frames are passed down the path (A) and each station ($S_1$, $S_2$ ... $S_N$) can write a packet of data to any frame which is empty. The stations ($S_1$, $S_2$ ... $S_N$) are arranged to operate in cycles in each of which a station can transmit up to a given number of packets. The stations ($S_1$, $S_2$, ... $S_N$) are operative to cause the frames to present a reset-request indication when all stations so far passed have completed packet writing in their current cycles. When a tail station ($S_N$) receives this indication, it knows all stations have finished their cycles and it transmits a reset signal on the other path (B) to initiate new station cycles. In order to increase the overall efficiency of the system in cases where only a single station wishes to transmit, each station is arranged to propagate a reset-request indication when starting a new cycle as well as upon cycle completion and to remember if any resets are received during the packet writing phase of its cycle.

FIG. 7

The present invention relates to a communication system, and in particular to a multiple access digital communications system between a plurality of stations.

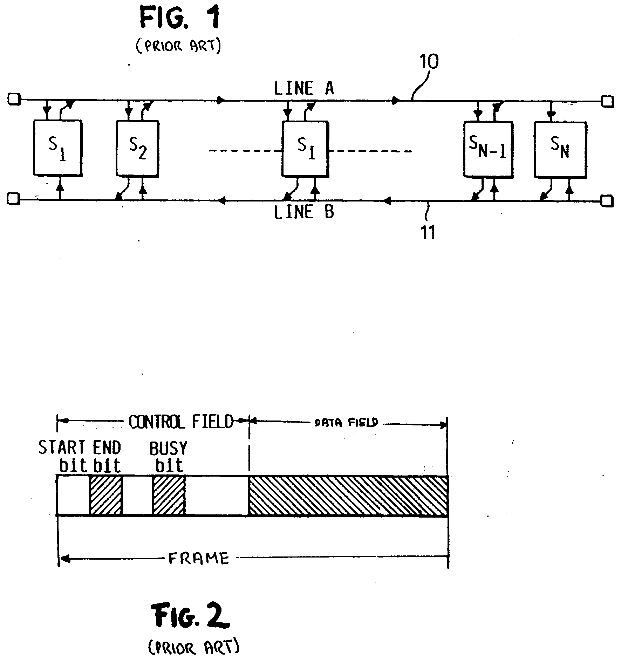

A plurality of stations, such as digital computers, may be interconnected to form a chain as shown in Figure 1 of the accompanying drawings, in which each station $S_1$, $S_2$... $S_N$ is connected to a pair of communication paths 10, 11 with one path 10 carrying traffic in one direction and the other path 11 carrying traffic in the other direction. These paths 10,11 may for example, be constitutes by dedicated physical lines A and B respectively as shown in Figure 1, or by separate channels in a multi-channel communications system using a common transmission media. If a station such as a station $S_i$ wants to transmit data to a station further down the chain (ie to the right in Figure 1) it can do this via line A, and if it wishes to transmit data to a station higher up the chain (ie to the left in Figure 1) it can transmit data via line B. Equally, station $S_1$ receives data from stations higher up the chain via line A and from stations lower down the chain via line B. Such an arrangement is known as a 'dual-bus' configuration.

In order for such a system to operate efficiently, and for data collisions to be avoided, it is necessary to have a suitable protocol for transmitting data between the stations, and a known protocol for achieving this is discussed in US-A-4532626; this protocol will be referred to herein as the FASNET protocol.

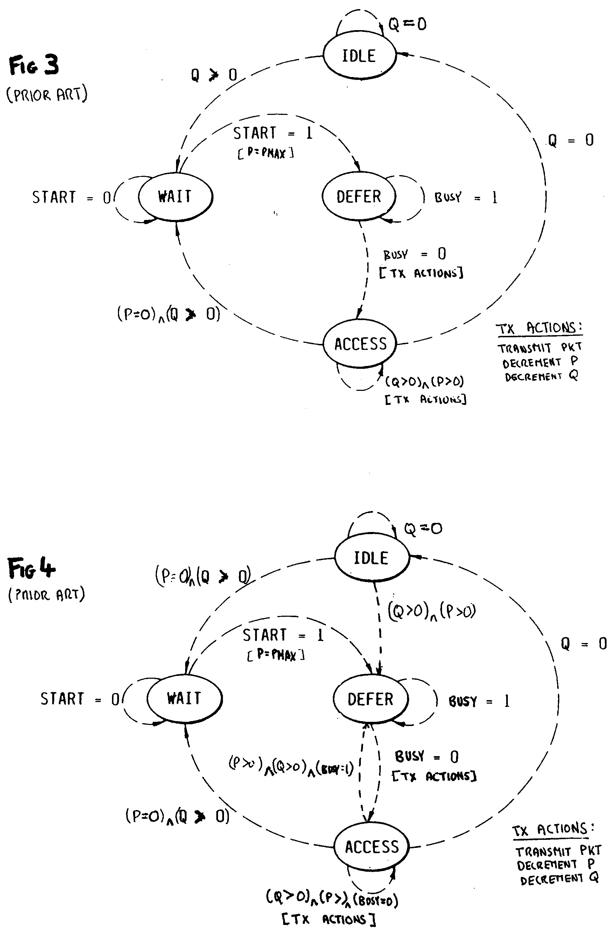

With FASNET, the system has frame-generating means that serve to generate signals defining logical multi-bit frames that pass down the line and are usable by the stations to carry data. The frame-generating means are generally constituted by the first station on each line (ie station $S_1$ for line A and station $S_N$ for line B), these stations being termed 'head' stations for their respective lines. The logical structure of each frame is shown in Figure 2 of the accompanying drawings and, as can be seen, each frame logically comprises a control field and a data field (at the line signal level, in addition to the signals defining these fields, each frame will generally also have associated signals defining the start of the frame and signals for enabling each station to synchronise with the frames). The operation of the system will now be discussed in more detail in respect of the frames passing down line A, but of course the situation is exactly analogous for line B.

The system operates cyclically in transporting data over line A in frames. As will become clear, within each system cycle, each station goes through a cycle of writing data to the frames. When all stations have completed their writing cycle, the system cycle terminates and new system and station cycles are thereafter commenced.

The first bit of the control field of each frame is used to indicate the start of a system cycle and is known as the "start" bit. Thus, for the first frame in a system cycle, the head station sets the start bit of the control field (this bit would normally reside in a 'reset' state distinguishable from its set state), and the frame is then passed down the line. When the stations detect that start bit as set, they start their respective writing cycles and may thereafter seize (ie pass data in) any subsequent frame in which the data field is empty on arrival at that station. Each station transmits data by filling the data field of a seized frame with a data packet which the station is to transmit, (each data packet carries addressing information as well as the data to be passed). At the same time that the station fills the data field with a data packet the station sets a "busy" bit in the control field of the frame to indicate to subsequent stations that the data field has been filled.

Considering station $S_i$, after initialisation by the first frame from station $S_1$ in which the start bit is set, the station $S_i$ monitors the busy bit of subsequent frames. Where the busy bit of a frame is set, the station $S_i$ knows that a station further up the line has already filled the data field of that frame, and therefore the station $S_i$ cannot use that frame to pass information down the line. If, however, a frame arrives with the busy bit not set, the station $S_i$ can then fill the data field for passing data further down the line, and set the busy bit. In this manner, collision between transmissions of different stations is avoided.

To ensure that each station has a reasonable share of the system bandwidth, each cycle station is arranged such that during each cycle it can transmit up to a predetermined maximum number of packets. System operation continues until all the stations have completed their writing cycles, that is, until they have transmitted their data packets, each up to their maximum permitted number of packets. When this happens, the next frame to pass down the line reaches the last station $S_N$ (also known as the 'tail' station) with the busy bit empty. Since the tail station $S_N$ will not itself transmit data on line A (there being no downstream stations), upon receiving a frame in which the busy bit is not set, the tail station $S_N$ recognises that the end of the system cycle has arrived. Upon detecting the end of the current system cycle, the tail station passes a signal up the other line (ie line B) by setting an "end" bit in the control field (see Figure 2) of a frame passing up that other line. When the end bit reaches the head station $S_1$ for line A station $S_1$ knows that all the stations down line A have completed their writing cycles and the next frame sent out has its start bit set to re-commence a system cycle for line A.

The operation of each station is represented in Figure 3 by a state transition diagram in which the conditions necessary for transitions between states are written on the arcs linking states and the actions taken upon transition are given in square brackets. In Figure 3, the parameter "Q" represents the number of packets waiting in the station's transmit queue whilst the parameter 'P' represents the remaining number of packets that the station can transmit in the current cycle, P being set to a value PMAX at the start of a cycle in which the station has data to transmit. Where the station had no data packets to send, ie Q = 0, the station resides in an "idle" state. Where the station has data packets to send, (ie Q > 0) the station moves into the "wait" state in which it waits for an initialising signal from the head station, ie a signal in which the start bit has been set (START = 1). When this happens, the station moves into the "defer" state. In this state each frame arriving at the station is checked to see if the busy bit is set (BUSY = 1), and if it is then the station remains in the defer state. Where, however, the busy bit is not set (BUSY = 0), the station moves into the "access" state in which subsequent frames are seized and data packets are transmitted down the line in the data fields of these frames. Each time a packet is transmitted the values of Q and P are decremented. The station remains in the access state as the data packets in its transmit queue are sent until either data has been input to the predetermined maximum number of packets (ie P becomes zero) in which case the station returns to the wait state, or all the data packets have been sent ie (Q becomes zero), in which case the station returns to the idle state.

The state transition diagram of Figure 3 applies to operation of the station in a sequential, or "gated" mode. In this mode, once a station has started writing data packets to the data fields of frames on the line, any newly-arriving data packet which the station determines must be transmitted must wait until the next cycle of frames before those newly-arrived packets can be transmitted (the value of Q is not updated to take account of these newly-arrived packets until the next cycle). The effect of this is that within a given station cycle, all packets originating from the same station will be grouped together, and the packet groups will be in the same order as the stations along line A.

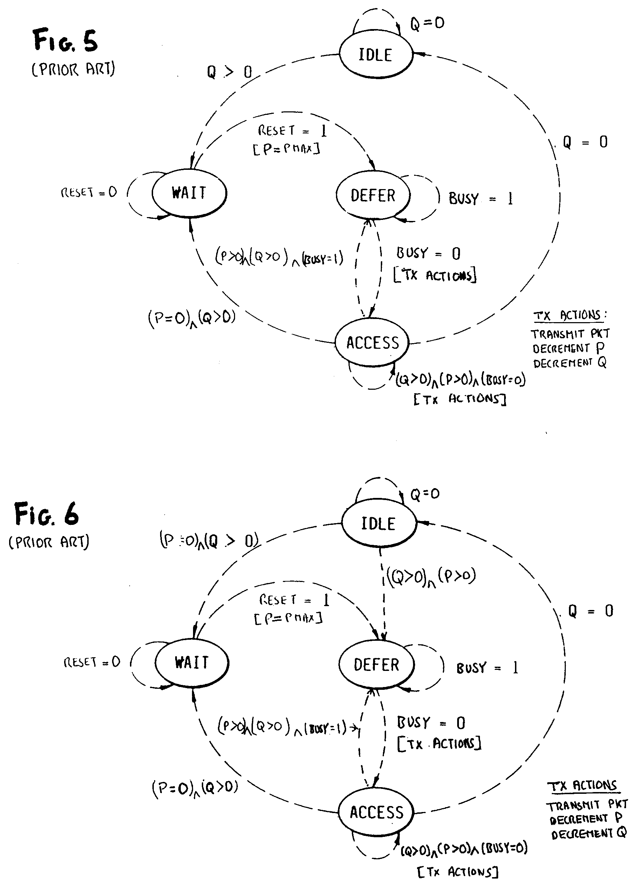

It is also possible for some or all of the stations to operate in a "non-gated" mode so that if during a cycle the station has further packets to transmit over and above those already stored at the station at the start of the cycle, then the station can transmit those further packets provided that the total number of packets does not exceed the predetermined maximum number of packets. Figure 4 of the accompanying drawing illustrates the state transition diagram applicable to operation in the non-gated mode. The main difference from Figure 3 diagram is that if a station returns to its idle state because Q = 0 whilst P is still non zero, and then during the same station cycle, a new packet arrives, in the non-gated operational mode of Figure 4, the station will transit from its idle state direct to its defer state ready to resume transmission when an empty frame arrives. Because a downstream station may now be passed a full frame after it has entered its access state; it is necessary to provide for a reverse transition from its access state to its defer state when a full frame is received but P and Q are still non zero. It will be apparent that the non-gated mode of operation suffers from the drawback that the grouping of packets from the same station achieved by gated operation, is lost in the non-gated mode.

A disadvantage of the FASNET protocol is that at the end of a system cycle, there will be a substantial delay before a new system cycle can start because an empty frame must first travel the length of line A to the tail station and then a frame with its end bit set must travel back along line B. 1simileThe system is effectively not in use for this round trip time.

In order to minimise this delay in a simple manner, a modification of the FASNET protocol was proposed and is disclosed and claimed in European Patent Specification EP-A-0,413,066 in the name of Hewlett-Packard Company. The modified protocol, herein called SIMPLE, differs from FASNET in that each station monitors line B and starts its new writing cycle when it detects the passage of an end bit up line B without waiting to receive a start bit on line A; the start bit position in the frame is thereby rendered redundant and is ommitted and the head station no longer plays a role in re-starting the stations. By initiating new station cycles from the end bit (also called the 'reset' bit) the delay between the end of cycle and the start of another is reduced. However, one effect of the SIMPLE proposal is that stations are restarted in order from the tail station backwards up to the head station so that a station near the tail station which may start to transmit packets may have to suspend transmission because an upstream station has restarted and seized the empty frames coming down the line. Packets from the same station may therefore be intermingled even in the gated mode of operation.

Figure 5 of the accompanying drawings shows a state transition diagram for a station operating according to the SIMPLE protocol in a gated operational mode. As can be seen, the differences between this diagram and the equivalent one for FASNET (Figure 3), is that the station moves from its WAIT to its DEFER state upon receipt of a reset signal (reset bit set on line B) rather than upon receipt of a start signal (start bit set on line A); in addition, in the SIMPLE diagram, provision is made for a station to return to its DEFER state from its ACCESS state should the station detect a filled frame (ie a frame with its busy bit set). For completeness, Figure 6 of the accompanying drawings shows the state transition diagram for a station operating according to the SIMPLE protocol in a non-gated operational mode, the difference between this diagram and that for FASNET being the use of the reset bit to cause transition between the WAIT and DEFER states.

Although the delay between cycles is reduced by the SIMPLE protocol, this delay is still significant particularly in the frequently encountered situation where only a single station wishes to transmit. For example, if a station $S_i$ is the sole transmitting station and if this station $S_i$ is spaced by X frames from the tail station $S_N$ (ie X frames are in passage between stations $S_i$ and $S_N$ at any given time), then after station $S_i$ has filled the last frame for its current writing cycle, 2 X empty frames will pass station $S_i$ before its next cycle is initiated; this is because X empty frames will pass before the first of these frames reaches the tail station $S_N$ and further X frames will pass before the resultant reset signal passes back up line B to station $S_i$ (it is assumed that the path lengths are the same for lines A and B). Because the tail station $S_N$ generates a reset on line B for each empty frame it sees on line A, unless counter measures are taken, the station $S_i$ will be reset 2X times in succession at the start of a new cycle which effectively serves to extend its writing cycle from PMAX packets per cycle to (PMAX + 2X) packets. On this basis, the efficiency of the system, in the case of a single-transmitting station would at first sight appear to be:

$$\frac{(PMAX + 2X)}{(PMAX + 4X)} \quad 100\%$$

In fact, this extension of the station writing cycles due to multiple resets can lead to unfairness between stations when multiple stations are transmitting. Accordingly, in the preferred version of SIMPLE described in the aforesaid European patent specification, each station is provided with circuitry which effectively inhibits the station from receiving further reset signals for a predetermined delay after the receipt of a first reset. The use of this circuitry to prevent multiple resets per cycle actually has the effect of decreasing overall efficiency in the case of a single-transmitting station, the system efficiency now being:

$$\left(\frac{PMAX}{PMAX + 2X}\right) \quad 100\%$$

The circuitry employed in each station for preventing multiple resets comprises a counter which is reloaded with a predetermined count each time a reset is received, means for decrementing the counter at the frame rate on line A, and gate means for preventing the receipt of further resets until the counter has been decremented to zero. This arrangement suffers from the drawback that the optimum value to be loaded in the counter of each station depends on system parameters such as system size, frame size, bit rate, as well as the relative position of each station on the line.

It is an object of the present invention to provide a communication system using a protocol of generally similar form to FASNET and SIMPLE but which offers improved performance for the single transmitting station case.

## Summary of the Invention

In general terms, the present invention involves a station seeking to store up a reset which it can then use to reinitiate a station cycle immediately the current cycle finishes. This process is so arranged that it will generally only be effective when no other station is wishing to transmit. The process involves the station starting a cycle only when no upstream station is transmitting and, at this point, passing on a reset request which will only reach the tail station when no downstream station wishes to transmit; the reset request is then turned into a reset on the other line and passed back to the requesting station where it is stored pending termination of its current cycle. Immediately the station's current cycle terminates a new one may start, provided that no upstream station is transmitting. In this manner, the inter-cycle delay for a single-transmitting station is minimised. Where other stations are also seeking to transmit, the reset request generated at cycle start will either be removed by downstream stations wishing to transmit, or the station will be delayed in restarting because upstream stations are transmitting.

Stated in more formal terms, according to one aspect of the present invention, there is provided a communications system comprising:
- a unidirectional communication path;
- frame-generating means operative to generate a succession of frames for carrying data packets and to transmit said frames onto a head end of said path for passage there along;
- a plurality of stations sequentially interconnected by said communication path such as to permit each station to read from and write to said path, each station operating in cycles during each of which it can transmit up to a predetermined number of data packets on said path by writing the packets into frames which the station detects have yet to be filled with data packets, the stations being operative to cause the frames to present a reset-request indication when all of the stations so far passed by the frames have completed packet writing in their current writing cycles, and
- reset propagation means operative upon a said reset-request indication arriving at the end of said communication path opposite said head end to cause a reset signal to be transmitted to all said stations to initiate new station cycles,
- each station having cycle-start means responsive to said reset signals to initiate a new station sycle;

characterised in that:

the cycle-start means of each station includes a resettable memory latch which is reset at the start of each station cycle and is set into its latched state upon a said reset signal being received, said cycle-start means being operative, following the completion of packet writing by said station for its current cycle, to initiate a new station cycle upon detection by the station of a said reset-request indication on said path when said memory latch means is in its latched state, the operation of the station at the start of a new cycle being such as to result in propagation of the reset-request indication that caused the station to start a new cycle.

The reset request indication can be provided by the state of a busy bit in each frame and this is effectively what happens in SIMPLE, since if this bit is not set, thereby indicating the frame to be empty, this indicates that the stations past which the frame has already travelled, have completed writing data packets in their current cycles and are requesting a new cycle to start. (In this context, a station can be considered to have completed packet writing when either it has sent its full packet allocation for the cycle or its transmit queue is empty, even though in a non-gated mode of operation, the arrival of further packets may result in re-initiation of writing.

It is to be understood that although the foregoing statement of invention has taken as the basis for its pre-characterising portion, a system operating according to the SIMPLE protocol, there is no appreciation in SIMPLE that the detection of the end of the station cycles can be effected otherwise than by determining whether or not a frame has been filled. In other words, generalisation of this function into a "reset-request indication" provided by the frames is not, by its inclusion in the pre-characterising portion of the statement of invention, to be considered as a generalisation explicit in the prior art.

The data field itself could be used as the reset-request indication since direct examination of this field to ascertain whether a frame is full or empty is equivalent to examining the busy bit.

Where the empty/full status of a frame (as evidenced by its busy bit or by the data field itself) is used as the reset-request indication, then a station which has finished its writing cycle will continue to let pass empty frames on said one path as reset-request indications until its memory latch is set by a reset signal on the other path. The station is then reset to start a new cycle. However, it does not seize the first empty frame as this is let past as another reset request indication. In the case where the station is the sole transmitting station, this empty frame let past at the start of a new cycle will travel to the tail of the said one path and cause a reset to travel up the other path to set the resetable memory latch; as a result, when the station completes its writing cycle, the next empty frame will trigger a new cycle. In this manner, only one frame per cycle is left empty.

In fact, if a separate reset-request bit is provided in the control field of each frame, it is possible to dispense with the need to let through one empty frame per cycle. In this case, the reset-request bit of a frame would for example, be initially set to indicate a reset request but would normally be reset by any station writing, or wishing to write a data packet to the frame, the exception to this being the first frame filled by a station in its cycle.

It will be appreciated that the resettable memory latch also serves to avoid multiple resetting per station cycle as the latch will only 'remember' one reset per cycle, however many resets pass along the other path.

Preferably, said reset propagation means comprises:
- a further unidirectional communications path interconnecting all said stations, said further path being oppositely directed to the first mentioned path; and
- return means located at the end of said first mentioned path opposite its said head end, and operative upon a said reset-request indication arriving at the return means, to transmit a said reset signal on said further path.

The return means may be a tail station as in the 'dual-bus' arrangement FASNET or may simply be a loop connecting the two communication paths to produce a "folded-bus" configuration in which stations write data to one path and read data from the other path.

## Brief Description of the Drawings

In the drawings, Figures 1 to 6 relate to the prior art communications system described above, whilst Figures 7 to 13 relate to a communications system embodying the present invention. More particularly, in the drawings:

**Figure 1**    is a diagram of the general arrangement of a prior art communications system;

**Figure 2**    illustrates the logical structure of a frame used for the transmission of data in the Figure 1 prior-art system;

**Figure 3**    is a state transition diagram illustrating operation of a station of the Figure 1 system in accordance with a first prior-art protocol, FASNET, when in a gated mode;

**Figure 4**    is a diagram similar to Figure 3 but showing operation of a station in accordance with FASNET when in a non-gated mode;

**Figure 5**    is a state transition diagram illustrating operation of a station of the Figure 1 system in accordance with a second prior-art protocol, SIMPLE, when in a gated mode;

**Figure 6**    is a diagram similar to Figure 5 but showing operation of a station, in accordance with SIMPLE when in a non-gated mode;

**Figure 7**    is a diagram of the general arrangement of the communications system embodying the present invention;

**Figure 8**    illustrates the logical structure of a frame used for the transmission of data in the Figure 7 system;

**Figure 9**    is a state transition diagram illustrating operation of a transmit state machine of a station of the Figure 7 system operating in a non-gated mode;

**Figure 10**    is a state transition diagram illustrating operation of a reset state machine of a station of the Figure 7 system;

**Figure 11**    is a block diagram of circuitry for implementing the functionality represented by the state transition diagrams of Figures 9 and 10;

**Figure 12**    illustrated a variant form of a control field of the Figure 8 frame;

**Figure 13**    is a diagram of a communications system having a'folded bus' topology which is also suitable for implementing the present invention, and

**Figure 14**    is a state transition diagram similar to Figure 9 but for operation of a station of the Figure 7 system in a gated mode.

## Description of the Preferred Embodiment

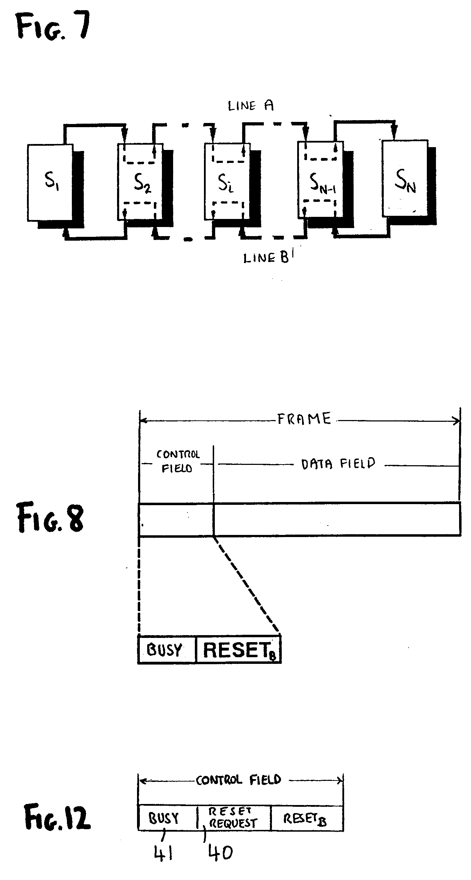

A communications system embodying the present invention will now be particularly described by way of non-limiting example, with reference to Figures 7 to 13.

The communication system shown in Figure 7 comprises a plurality of stations $S_1, S_2 .... S_i .... S_{N-1}, S_N$ connected in a chain by two unidirectional, oppositely-directed communication paths 10,11 here shown as lines A and B. Each line A,B carries traffic, in the form of frames, the two lines A,B carrying traffic in opposite directions. Frames are generated onto line A by frame-generating means which in the present embodiment are provided by station $S_1$, the head station for Line A; in a similar manner, station $S_N$ as the head station for line B generates frames onto line B. Each station can read and write data on both lines A and B, however, each end station does not need to read data on the line for which it is the head station nor to write data on the line for which it is the tail station. If a station $S_i$ wants to transmit data packets down the chain of stations (ie to the right in Figure 7) it can do so by writing packets into empty frames on line A; if station $S_i$ wishes to transmit data up the chain (ie to the left in Figure 7) it can do so by writing packets into empty frames on line B. The arrangement of the Figure 7 system is thus generally similar to that of the Figure 1 system. One difference illustrated in these Figures is that in the Figure 1 system the lines A and B are merely tapped for reading and writing so that writing of data packets into a frame involves inserting signals into an analogue stream; in contrast, in the Figure 7 system the lines A and B pass into the stations and through digital circuitry (for example, a short shift register) where data extraction and insertion takes place. This difference is not critical to the operation of the present invention and either method of reading and writing data (including control data) may be used.

The operation of the Figure 7 system for the control of data transmission in frames on line A is the same as that for the control of data transmission in frames on line B. Accordingly, hereinafter the description of the Figure 7 embodiment is limited to the control of data transmission on line A.

As in the prior art systems described with reference to Figures 1 to 6, in the present embodiment of the invention each station operates in a cycle during each of which it can transmit up to a predetermined maximum number of packets PMAX in frames on line A. As will be more fully described below, a counter is loaded with the value of PMAX at the start of a new station cycle and the counter value P of the counter is then decremented each time a packet is written into a frame for transmission; when P = 0, writing ceases until a new cycle is initiated. Each station has an associated transmit queue for queuing packets to be transmitted, the current number of packets in the queue herein referred as the value Q.

Figure 8 illustrates the logical structure of a frame on line A of the Figure 7 system (as with the prior art systems described with reference to Figures 1 to 6, the signals carried on lines A,B will include signals for defining the start of each frame and for effecting synchronisation as well as the signal associated with the logical content of each frame). As can be seen from Figure 8, each frame comprises a control field and a data field, the latter being intended to receive a data packet for transmission. The control field comprises a Busy bit and a Reset bit. The Busy bit is initially in a reset state, taken as logical 'O', to indicate that the data field is empty; upon a packet being written into the data field by a station, the station rewrites the Busy bit to a set state, taken as logical '1'. The Reset bit "RESET$_B$" is a bit used to initiate new cycles of the station in respect of data transmission on line B; the frames on line B include a similar Reset bit "RESET$_A$"(not shown) which controls initiation of new station cycles in respect of data transmission on line A. The Reset bit resides in a reset state, taken as logical "O" when resetting (restarting) the stations is not required; to initiate new station cycles, the Reset bit is set to state corresponding to a logical '1'. The setting to logical '1' of the Reset bit in frames on line B, that is, the Reset bit controlling station restarting for line A data transmission, is effected by the tail station $S_N$ for line A upon receipt of an empty frame on line A (ie a frame in which the Busy bit is a logical '0').

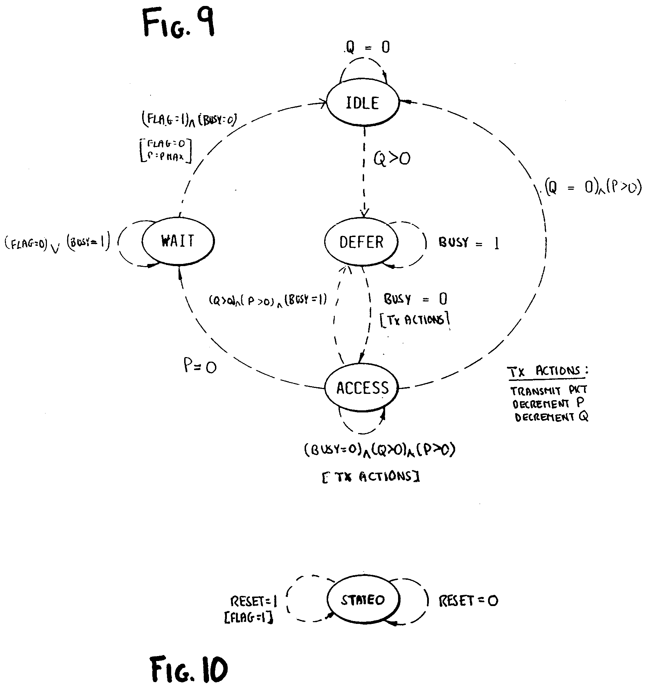

The operation of each station in respect of data transmissions on line A can be described in terms of two state machines, namely a transmit state machine and a reset state machine, the state transition diagrams of these state machines being shown in Figures 9 and 10 respectively. These two state machines interact through a flag with a logical value, labelled FLAG, that can be set to a logical "1" by the reset state machine and reset to a logical "0" by the transmit state machine.

The reset state machine is trivial and has only one state "STATE 0". Upon the station reading a reset signal RESET$_B$ on line B which has a logical value"1", the reset state machine sets FLAG = 1. However, if Reset$_B$ has a logical value "0" no action is taken.

The transmit state machine has four states, namely WAIT, IDLE, DEFER, and ACCESS. These states and the conditions causing transitions between these states are described below:

IDLE - The station enters this state on initialisation at which time P is set to PMAX and the flag is reset to give FLAG = 0. The station waits in this state until data is available to transmit (Q > 0) when it transits to the DEFER STATE. In the IDLE state, the station will always have P > 0.

DEFER - In this state, the station is waiting for an empty frame to pass (the station ascertains whether a frame is full or empty by examining the Busy bit of the frame; if BUSY = 0, then the frame, that is, its data field, is empty). When an empty frame passes, the station writes a packet into the frame's data field, decrements the P and Q counts, and transits to the ACCESS state.

ACCESS - In this state, if there is still a packet to send (Q > 0) and the station is permitted to do so in its current cycle (P > 0), then if the next frame to arrive is empty (BUSY = 0) the station writes the next packet into the frame's data field and decrements P and Q; however, if the next frame is full (Busy = 1), the station returns to its DEFER state without transmitting a packet. If after transmitting a packet, the station has no more packets to send (Q = 0) but still has the ability to do so within its current cycle (P > 0), then the station returns to its IDLE state to await further packets. However, if after transmitting a packet the station has completed its permitted writing for the current cycle, the station transits to its WAIT state to await the start of a new cycle.

WAIT - The station will remain in its WAIT state until its flag has been set (FLAG = 1) and the station detects an empty frame (BUSY = 0) on line A. When this happens, the station resets the flag (FLAG = 0) and reloads the P counter (P = PMAX). Thereafter, the station transits to the IDLE state or, alternatively where Q > 0, the station could transit straight to the DEFER state. The station is operative to let past, unfilled, the empty frame that triggered its transit out of the WAIT state.

Operation of the stations in accordance with the state transition diagrams of Figures 9 and 10 results in each station having the ability to remember whether any Reset signal has been received since its current cycle started. Furthermore, at the start of each of its cycles, each station seeks to initiate a new reset by passing on an empty frame. The effect of these two features is that where only a single station is wishing to transmit packets, the empty packet it allows through at the start of a cycle will successively reach the tail station $S_N$ to initiate a Reset which is detected by the station and remembered by its flag. As a result, when the current station cycle ends, the station is immediately triggered into a new cycle by the next frame without having to wait for this frame to travel to the tail station and for a Reset signal to return. The efficiency of the system in this case is therefore:

$$\left( \frac{\underline{PMAX}}{PMAX + 1} \right) 100\%$$

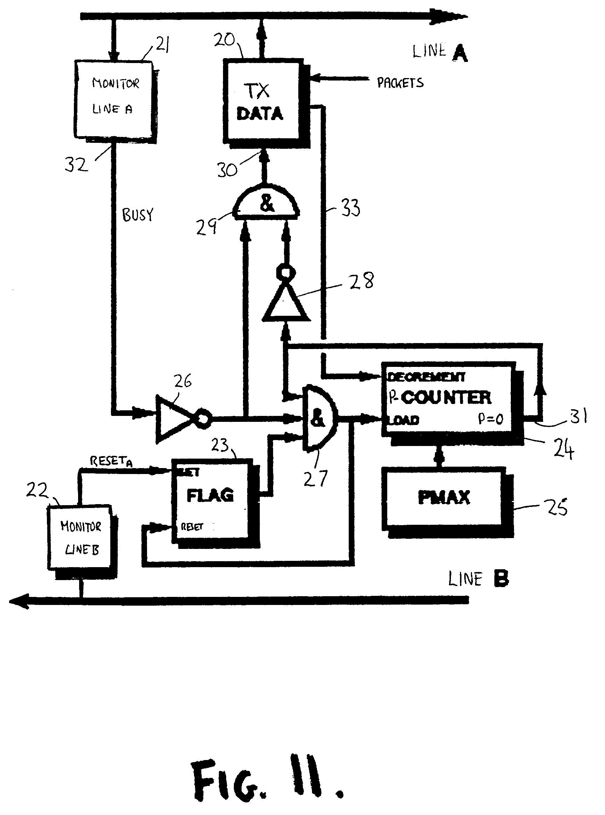

Figure 11 illustrates circuitry suitable for implementing the station reset (that is, station cycle restart) functionality represented in the state transition diagrams of Figures 9 and 10, this being primarily the functionality associated with the WAIT state. The functionality associated with the states IDLE, DEFER and ACCESS is generally similar to that of the prior art systems described above and may be implemented as in such systems; in Figure 11, most of this functionality is embodied in the transmit unit 20 to which data packets to be transmitted are passed (into a transmit queue) for transmission over line A in empty frames (as indicated by an output from a line - A monitor unit 21 arranged to detect the state of each frame's Busy bit).

The Figure 11 circuitry comprises, as well as the transmit unit 20 and line-A monitor 21, a line-B monitor 22 for detecting Reset signals on line B, a Flag flipflop 23, a P-counter for keeping count of the remaining number P of packets that may be sent in the current station cycle, a register 25 for holding the predetermined value PMAX, inverters 26,28 and AND gates 27,29.

The transmit unit 20 is controlled by the logical state of a signal applied to an enable input 30 of the unit; when this signal is logic '1', the unit is enabled to transmit a packet in the current frame, whilst when this signal is logic '0', the unit 20 is inhibited.

The signal applied to the enable input 30 of the transmit unit 20 is provided by the output of the AND gate 29. One input of this gate 29 is derived from an output 31 of the P-counter 25 via the inverter 28, the output 31 being a logic '1' when P = 0 and otherwise being a logic '0'; as a result, the AND gate 29 and thus the transmit unit 20 is inhibited when P = 0. The second input of the gate 29 is derived from a Busy output 32 of the line A monitor 21, through the inverter 26. When a frame is empty, the monitor 21 detects that its Busy bit is set to zero and produces a corresponding output (busy = 0) at its Busy output 32; this output is inverted by inverter 26 to a logic '1' which is applied to the gate 29. As a result, provided P = 0, a logic '1' will appear at the output of the gate 20 to enable the transmit unit 20 when an empty frame is detected. However, when a full frame is detected, the busy output 31 of the monitor 21 will be at logic '1' causing a logic '0' to be applied to the gate 29, thereby inhibiting the transmit unit 20.

The station is, in fact, in its WAIT state when the output 31 of the counter 24 is at logic '1' (P = 0).

The counter 24 is reloaded with an initial count value PMAX from the register 25 when the output of the AND gate 27 becomes logic '1'. This occurs at the start of a new cycle as determined by the three inputs of the gate 27 simultaneously being at logic '1'. The three inputs to gate 27 are as follows:

First input -
this is simply the state of output 31 of the counter 24 and will be logic '1' when P = 0;
Second input -
this is the inverted state of the Busy output 32 and will be logic '1' when an empty frame is detected;
Third input -
this is the output 33 of the Flag flipflop 23 and will be logic '1' when a Reset signal has been detected on line B by the monitor 22 (thereby feeding a Reset$_A$ signal to the flipflop 23 to put it in a set state).

If any of the inputs of the gate 27 is logic '0', then the counter is not reloaded. The counter is thus only reloaded at the end of the current cycle (P = 0), when an empty frame is detected (Busy = 0) and a Reset has been received (Flag = 1) since the start of the current cycle. This latter condition results from the fact that upon the counter being loaded at the start of a cycle, the Flag flipflop 23 is reset so that its output becomes logic '0'. The flipflop 23 will be set by any subsequent Reset detected on line B by the monitor 22. It will be appreciated that the flipflop 23 has the effect of ignoring Resets received on line B after the first Reset received in the current cycle.

The arrangement of the Figure 11 circuitry is such that the empty frame causing loading of the counter 24 at the start of a new cycle, is not also used by the transmit unit 20 for the transmission of data but is allowed to travel on, empty.

As each packet is sent during a station cycle, the P-counter is decremented by a signal output from the unit 20 on line 33.
Various modifications and variants are possible with respect to the embodiment of the invention described above with reference to Figures 7 to 11.

Thus, for example, it is possible to avoid the need to allow an empty frame to pass at the start of each cycle if an alternative indicator is provided for enabling the tail station to detect when a reset should be generated. In this respect, the frame Busy bit of the embodiment of Figures 7 to 11, can be viewed as performing two purposes, namely a first purpose of indicating whether the data field of the corresponding frame is full or empty, and a second purpose of providing a reset-request indicator.

When in a first state, this reset-request indicator indicates that the stations past which the frame has travelled all wish a reset to be transmitted up line B by the tail station $S_N$ (because each station has either finished its writing cycle, or has just started a new cycle). However, the reset-request indicator resides in a second state when any of the stations passed by the frame does not wish a reset to be generated by the tail station (because it is in the middle of its writing cycle). In the Figures 7 to 11 embodiment where the Busy bit serves as the reset-request indicator, the aforesaid 'first' state of the indicator corresponds to Busy = '0' whilst the 'second' state of the indicator corresponds to Busy = '1'.

As illustrated in Figure 12, the reset-request indicator can be provided as a control bit, separate from the Busy bit 41, in the control field of each frame. In this case, the reset-request indicator bit would initially be in its first state (for convenience, logic '1') requesting a reset.

If the system is arranged to operate in substantially the same manner as the embodiment of Figure 7 to 11 with a station triggered into a new cycle leaving empty the frame causing this triggering, then the reset-request indicator bit 40 will be changed by a station from its first to its second state when the station writes a packet to the frame; the reset-request indicator bit 40 is thus changed at the same time as the Busy bit and nothing is really gained (except in ease of interpreting the control bits).

However, if a station starting a new cycle is allowed to use the frame that triggered its new cycle, for carrying a data packet, then system operation can be improved. In this case, the Busy bit will be changed as before whenever a packet is written to a frame, but now the reset-request indicator bit:

a) is used to control triggering of a new station cycle (that is, it will feed the second input of gate 27 in Figure 11 rather than the output from inverter 26), a new cycle only being permitted to start when the reset-request indicator is in its first state; and

b) is set into its second state (logic '0') only when the corresponding frame either:

i) has data written to it otherwise than by a station just triggered to start its cycle by that frame, or

ii) passes a station that wishes to write data (but is unable to do so because the frame is full) otherwise than a station just triggered to start its cycle by the frame.

Whenever the tail station $S_N$ receives a frame in which the reset-request indicator bit is still in its first state, it outputs a reset bit on line B.
The latter arrangement means that where only one station is transmitting, the system efficiency can reach 100% because all frames can be used to carry data packets as the reset-request indicator bits carry the reset request information.

Furthermore, the use of a separate reset-request indicator makes it possible to arrange for a station to request a reset in the frame carrying its last data packet for its current cycle, rather than having to await the next empty frame before making such a request.

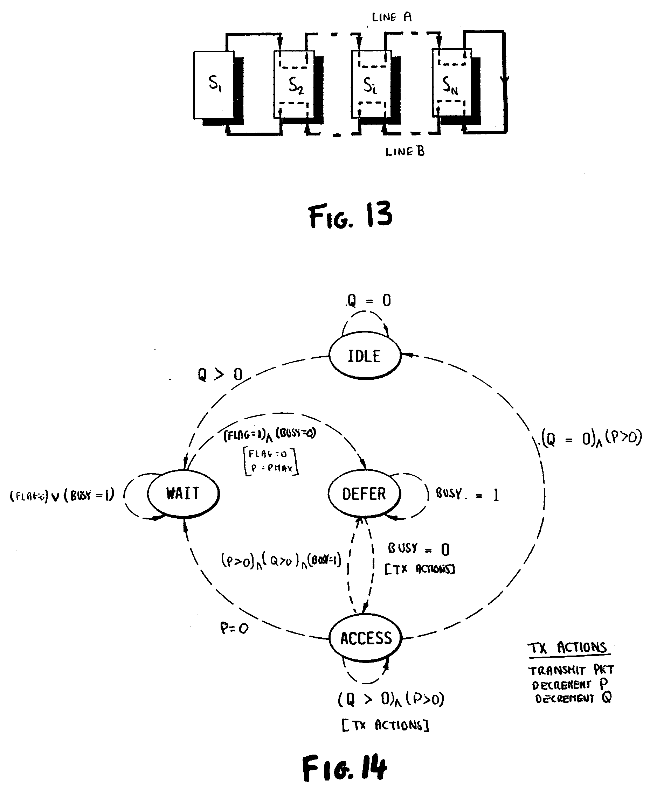

The embodiment of Figures 7 to 11 and the Figure 12 variant, can also be modified to operate in a 'folded bus' configuration rather than the 'dual-bus' configuration described. In a 'folded bus' configuration, all stations would write data on line A and read data from line B, lines A and B being coupled (directly of through a repeater) at their ends remote from the head station $S_1$. In this case, the function of the tail station of detecting a reset request (either implicit in the state of the Busy bit or as a separate control bit) and outputting a reset on line B, is simply accomplished by having the stations treat the relevant control bit as a Busy/reset-request bit on line A and as a Reset bit on line B (appropriate regard being had to the logic state interpretations required); the last station $S_N$ need not therefore perform any special function. Such a 'folded bus' configuration is illustrated in Figure 13.

The embodiments of Figure 7 to 13 have been described in connection with non-gated mode operation of the stations. It is also possible to operate one or more stations in a gated mode and Figure 14 shows a state transition diagram for the transmit state machine of a station when the latter is operating in a gated mode. As can be seen, if a station finishes transmitting packets because its queue is empty (Q = O), whilst still permitted to send packets in its current cycle (P > O), then it exits from its ACCESS state to its IDLE state where it remains until its queue is no longer empty; now, however, the station will pass to its WAIT state to await reloading of its P counter rather than passing to its DEFER state as happened for non-gated operations. If the FLAG is set then the first empty frame received on line A will result in the station passing into its DEFER state with the P counter being reloaded and the FLAG being reset.

## Claims

1. A communication system comprising:
   - a unidirectional communication path (10)
   - frame-generating means ($S_1$) operative to generate a succession of frames for carrying data packets and to transmit said frames onto a head end of said path (10) for passage there along;
   - a plurality of stations ($S_1$, $S_2$ ...$S_N$) sequentially interconnected by said communication path (10) such as to permit each station to read from and write to said path, each station operating in cycles during each of which it can transmit up to a predetermined number of data packets on said path by writing the packets into frames which the station detects have yet to be filled with data packets, the stations ($S_1$, $S_2$ ...$S_N$) being operative to cause the frames to present a reset-request indication when all of the stations so far passed by the frames have completed packet writing in their current writing cycles, and
   - reset propagation means (11,$S_N$) operative upon a said reset-request indication arriving at the end of said communication path (10) opposite said head end to cause a reset signal to be transmitted to all said stations to initiate new station cycles,
   each station ($S_1$, $S_2$ ... $S_N$) having cycle-start means responsive to said reset signals to initiate a new station cycle; **characterised in that:**
   the cycle-start means of each station ($S_1$, $S_2$ ... $S_N$) includes a resettable memory latch which is reset at the start of each station cycle and is set into its latched state upon a said reset signal being received, said cycle-start means being operative, following the completion of packet writing by said station for its current cycle, to initiate a new station cycle upon detection by the station of a said reset-request indication on said path when said memory latch means is in its latched state, the operation of the station at the start of a new cycle being such as to result in propagation of the reset-request indication that caused the station to start a new cycle.

2. A communications system according to claim 1, wherein said reset-request indication is provided by an empty frame, that is a frame which has yet to have a data packet written to it, each station at the start of a new cycle leaving empty the empty frame that caused the station to start its new cycle.

3. A communications system according to claim 2, wherein each said frame comprises a data field for receiving a said data packet, and a control field including an empty/full indicator for indicating whether the data field is empty or full, said empty/full indicator being initially in a reset state indicating the data field is empty and being set into a set state by a said station upon that station writing a data packet into the data field; said empty/full indicator, when in its reset state, providing said reset-request indication.

4. A communications system according to claim 1, wherein each said frame comprises a data field for receiving a said data packet, and a control field including a reset-request indicator which is initially in a set state providing said reset-request indication but which is resettable into a reset state by said stations.

5. A communications system according to claim 4, wherein each station is operative to reset said reset-request indicator of a frame upon the station writing a data packet to the data field of the frame, except where said data packet is the first to be written in the current cycle of the station.

6. A communications system according to claim 4, wherein each station is operative to reset said reset-request indicator of a frame upon the station writing a data packet to the data field of the frame except where said data packet is the first or the last such packet to be written in the current cycle of the station.

7.    A communications system according to Claim 1, wherein said reset propagation means comprises:

- a further unidirectional communications path (11) interconnecting all said stations, said further path being oppositely directed to the first mentioned path; and

- return means ($S_N$) located at the end of said first mentioned path opposite its said head end, and operative upon a said reset-request indication arriving at the return means, to transmit a said reset signal on said further path.

8.    A communications system according to claim 7, wherein said return means operatively interconnects said paths whereby the said frames passing along said first mentioned path are propagated on said further path enabling any one of said stations to transmit data packets for receipt by any other of said stations, a said reset-request indication on said first mentioned path being recognised by said stations as a reset signal when appearing on said further path.

9.    A communications system according to claim 7, wherein the said paths are separate and the structure and operation of the system in respect of packet transmission in frames along said first mentioned path is duplicated for said further path, each station being capable of transmitting data packets to any other said station by writing packets to that one of said paths for which the intended recipient station is downstream of the transmitting station considered in the direction of transmission along the path.

# FIG. 1
(PRIOR ART)

10

LINE A

$S_1$ — — $S_2$ — — — — $S_I$ — — — — — $S_{N-I}$ — — $S_N$

LINE B

11

CONTROL FIELD — DATA FIELD

START END    BUSY
bit  bit     bit

FRAME

# FIG. 2
(PRIOR ART)

12

Fig 3 (PRIOR ART)

Fig 4 (PRIOR ART)

**Fig. 5**
(PRIOR ART)

```
                                    Q = 0
                              ⟲
                           ( IDLE )
            Q > 0    ⟋                  ⟍
                 ⟋                         ⟍   Q = 0
            RESET = 1
            [P = Pmax]
  RESET = 0  ( WAIT )        ( DEFER )   BUSY = 1
                 ⟍                  ⟍
              (P>0)∧(Q>0)∧(BUSY=1)      BUSY = 0
                                        [TX ACTIONS]
        (P=0)∧(Q>0)
                           ( ACCESS )
                                                    TX ACTIONS:
                                                    TRANSMIT PKT
                                                    DECREMENT P
                                                    DECREMENT Q
              (Q>0)∧(P>0)∧(BUSY=0)
                   [TX ACTIONS]
```

**Fig. 6**
(PRIOR ART)

```
                                    Q = 0
                              ⟲
                           ( IDLE )
        (P=0)∧(Q > 0)  ⟋              ⟍
                 ⟋                         ⟍   Q = 0
                           (Q>0)∧(P>0)
            RESET = 1
            [P = Pmax]
  RESET = 0  ( WAIT )        ( DEFER )   BUSY = 1
                 ⟍                  ⟍
              (P>0)∧(Q>0)∧(BUSY=1)      BUSY = 0
                                        [TX ACTIONS]
        (P=0)∧(Q>0)
                           ( ACCESS )
                                                    TX ACTIONS
                                                    TRANSMIT PKT
                                                    DECREMENT P
                                                    DECREMENT Q
              (Q>0)∧(P>0)∧(BUSY=0)
                   [TX ACTIONS]
```

14

**FIG. 7**

LINE A

$S_1$ $S_2$ $S_i$ $S_{N-1}$ $S_N$

LINE B

**FIG. 8**

FRAME

CONTROL FIELD | DATA FIELD

BUSY | RESET$_B$

**FIG. 12**

CONTROL FIELD

BUSY | RESET REQUEST | RESET$_B$

41 40

# Fig. 9

**TX ACTIONS:**
TRANSMIT PKT
DECREMENT P
DECREMENT Q

# Fig. 10

FIG. 11.

LINE A

$S_1$    $S_2$    $S_i$    $S_N$

LINE B

FIG. 13

$Q = 0$

IDLE

$Q > 0$

$(Q = 0)_\wedge (P > 0)$

$(FLAG = 1)_\wedge (BUSY = 0)$

$\begin{bmatrix} FLAG = 0 \\ P = PMAX \end{bmatrix}$

$(FLAG = 0) \vee (BUSY = 1)$

WAIT    DEFER    $BUSY = 1$

$BUSY = 0$
[TX ACTIONS]

$(P > 0)_\wedge (Q > 0)_\wedge (BUSY = 1)$

$P = 0$

ACCESS

$(Q > 0)_\wedge (P > 0)$

[TX ACTIONS]

TX ACTIONS
TRANSMIT PKT
DECREMENT P
DECREMENT Q

FIG. 14

18

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 413 066 (LIMB)<br>* column 4, line 7 - line 32 *<br>* column 5, line 16 - line 35; figures 1,2,3 *<br>--- | 1-9 | H04L12/40 |
| A | EP-A-0 147 994 (A.T.T.)<br>* page 3, line 23 - page 4, line 28 *<br>* page 12, line 24 - page 13, line 6 *<br><br>----- | 1,3,7 | |
| | | | **TECHNICAL FIELDS SEARCHED (Int. Cl.5)**<br><br>H04L |

The present search report has been drawn up for all claims

| Place of search | Date of completion of the search | Examiner |
|---|---|---|
| THE HAGUE | 06 DECEMBER 1991 | DE LA FUENTE DEL AGU |